# EUROPEAN PATENT APPLICATION

(11) **EP 3 480 499 A1**
(43) Date of publication of application: **08.05.2019**
(21) Application number: 17820336.0
(22) Date of filing: 30.06.2017
(51) Int. Cl.: F16K 15/02, F16K 1/36, F16K 1/42

(54) **CHECK VALVE**

(30) Priority: 30.06.2016 JP 2016130861
(71) Applicant: Kitz Corporation, Chiba-shi, Chiba 261-8577 (JP)
(72) Inventor: TSUDA, Kenichiro, Chiba-shi Chiba 261-8577 (JP)
(74) Representative: Herzog, Markus
(86) International application number: PCT/JP2017/024205
(87) International publication number: WO 2018/003982

(57) **Abstract**

Provided is a check valve capable of performing sealing at extremely low pressure and high pressure while suppressing destruction of a sealing member. In a check valve according to the present invention, at high pressure, a poppet valve element 3 moves toward a valve seat 21, sealing members 352 and 354 are compressively deformed by the valve seat 21, and a valve element sealing surface 351 and the sealing members 352 and 354 make contact with the valve seat 21, whereas at extremely low pressure, the poppet valve element 3 moves toward the valve seat 21, and only the sealing members 352 and 354 among the sealing members 352 and 354 and the valve element sealing surface 351 make contact with the valve seat 21 to seal a fluid passage P.

## Description

### Technical Field

The present invention relates to a check valve.

### Background Art

Various apparatuses which handle fluid use a check valve that regulates the flow of fluid in one direction only.

A check valve generally has a basic structure in which a valve seat provided in a fluid passage that causes a primary-side passage and a secondary-side passage to communicate with each other and a valve element that moves toward and away from the valve seat are provided, and the valve element is biased toward the valve seat by a spring.

Patent Document 1 below discloses an example of this type of check valve. In Patent Document 1 below, an O-ring is provided in a sealing surface (a surface contacting a valve seat) of a valve element, and the O-ring is pressed against the valve seat by a spring to block the valve seat so that fluid won't flow back.

In recent years, however, a hydrogen station's supply infrastructure for filling fuel gas into fuel cell automobiles has spread. In piping facilities of the hydrogen station, a check valve which is an in-line check valve is generally used together with a flow rate control valve and the like. In this case, since high-pressure (for example, 99 MPa) hydrogen may flow into the hydrogen station, it is important that the check valve can also endure high-pressure fluid.

Therefore, Patent Document 2 below proposes a check valve designed to exhibit a reliable backflow prevention performance at high pressure. Specifically, a curved portion that can make close contact with an O-ring (hereinafter also referred to as a sealing member) of a valve element is formed in a valve seat, and a first inclined portion and a second inclined portion are formed about the curved portion. When the valve is closed, since the sealing member makes contact with the valve seat, a contact area between the sealing member and the valve seat increases, and a reliable sealing state is created even at high pressure without destroying the sealing member.

### Citation List

### Patent Document

Patent Document 1: Patent Publication JP-A-H05-302680
Patent Document 2: Patent Publication JP-A-2007-205406

### Summary

### Technical Problem

As described above, conventionally, although various check valve structures have been proposed, a structure capable of securing reliable sealing between a valve element and a valve seat at both high pressure and extremely low pressure (for example, 0.1 MPa or lower) has not been discussed.

The present invention has been made in view of the above-described problems, and an object thereof is to provide a check valve capable of performing sealing at extremely low pressure and high pressure while suppressing destruction of a sealing member.

### Solution to Problem

In order to solve the problem, a check valve according to the present invention includes: a body portion having a fluid passage therein; a valve seat provided in the middle of the fluid passage; and a valve element that moves closer to and away from the valve seat to open and block the fluid passage, wherein a sealing member softer than the valve element is provided in a valve element sealing surface of the valve element that can make contact with the valve seat, the sealing member protrudes toward the valve seat from the valve element sealing surface, at high pressure, the valve element moves toward the valve seat, the sealing member is compressively deformed by the valve seat, and the valve element sealing surface and the sealing member are brought into contact with the valve seat, and at extremely low pressure, the valve element moves toward the valve seat, and only the sealing member among the sealing member and the valve element sealing surface is brought into contact with the valve seat to seal the fluid passage.

In order to realize a sealing state at extremely low pressure (for example, 0.1 MPa or lower), it is necessary to bring a sealing member (for example, a resin material such as a sheet or an O-ring) softer than the valve element into contact with the valve seat to realize sealing. When both the sealing member and the valve element sealing surface are brought into contact with the valve seat to realize sealing, for example, by taking this into consideration, although the sealing member softer than the valve element is plastically deformed by being strongly pressed against the valve seat at high pressure, the deformed sealing member may be unable to provide a sufficient sealing performance. In contrast, in the present invention, the sealing member is compressively deformed by the valve element at high pressure so that the valve element sealing surface makes contact with the valve seat, whereas only the sealing member among the valve element sealing surface and the sealing member makes contact with the valve seat to seal the fluid passage at extremely low pressure. With this configuration, it is possible to suppress deformation of the sealing member by bringing the valve element sealing surface into contact with the valve seat at high pressure while allowing the sealing member to perform sealing at extremely low pressure. As a result, it is possible to maintain the sealing performance at extremely low pressure and high pressure while suppressing destruction of the sealing member.

In the check valve according to the present invention, it is also preferable that the valve element sealing surface of the valve element is inclined in a direction away from the valve seat as the valve element sealing surface extends toward an outer circumference.

According to this configuration, when the valve element moves toward the valve seat at high pressure, since a portion of the valve element sealing surface makes contact with the valve seat rather than the entire surface of the valve element sealing surface that makes contact with the valve seat, it is possible to further decrease the contact area between the valve element sealing surface and the valve seat. That is, since the valve element sealing surface and the valve seat make line contact with each other to seal the fluid passage, it is possible to increase the pressing force of the contact portion as compared to when realizing a contact surface with surface-contact and to further enhance the sealing performance at high pressure.

In the check valve according to the present invention, it is also preferable that a portion of the valve seat that makes contact with the sealing member is formed so as to swell toward the valve element.

According to this configuration, the contact area when the sealing member makes contact with the valve seat decreases as compared to when the valve seat is a planar surface, and the sealing member and the valve seat can be brought into line contact. Due to the line contact, it is possible to increase the pressing force of the contact portion as compared to when sealing the fluid passage with surface-contact, and to enhance the sealing performance.

In the check valve according to the present invention, it is also preferable that the sealing member is a sheet formed from a resin material, the sheet is fixed to the valve element by a screw that is screwed into a female screw portion formed on the valve element sealing surface of the valve element, and a guide member that extends by a distance equal to or greater than a thickness of the sheet in an axial direction of the screw from a position corresponding to a bottom surface of the sheet to support a head seat of the screw is provided around a cylindrical portion of the screw.

According to this configuration, when a screw for fixing the sheet to the valve element is fastened, the head seat of the screw is supported by the guide member, and excessive fastening of the screw is prevented. That is, since it is possible to prevent the sheet from being strongly pressed against the head seat of the screw due to the excessive fastening of the screw, it is possible to suppress deformation of the screw.

In the check valve according to the present invention, it is also preferable that the guide member further includes an extension portion that covers a portion of a surface of the sheet that is close to a central shaft of the screw, and a portion, close to the central shaft of the screw, of a contact surface of the valve element that makes contact with the sheet is provided with a convex portion that protrudes toward the extension portion from the contact surface.

According to this configuration, when the sheet collapses by being pressed against the valve seat (that is, the sheet is plastically deformed), since the sheet is always in the pressed state due to the convex portion and the extension portion of the guide member, it is possible to apply a sufficient contact pressure to the contact portion when the sheet makes contact with the valve seat. As a result, even when the sheet collapses and is plastically deformed, it is possible to maintain a sufficient sealing performance.

In the check valve according to the present invention, it is also preferable that the sealing member is provided closer to an outer circumference than a portion, excluding the sealing member, of the valve element, the portion being contactable with the valve seat.

According to this configuration, when the valve element makes contact with the valve seat at high pressure, for example, a portion in which the valve element and the valve seat make contact with each other is present on the inner side of the sealing member. At high pressure, the force of pulling from the secondary side toward the primary side is abruptly applied to the vicinity of the valve seat immediately before and after a sealing state is created, particularly. However, since a portion of the valve element that makes contact with the valve seat is present on the inner side of the sealing member (that is, the sealing member is provided on an outer side portion (the outer circumference) of the valve element that makes contact with the valve seat), it is possible to prevent the sealing member from being pulled toward the primary side and being detached.

In the check valve according to the present invention, it is also preferable that the valve element is formed integrally from the same material.

Although the valve element sealing surface of the valve element makes contact with the valve seat at high pressure, according to this configuration, since the valve element sealing surface is integrally formed as the valve element, the portion (that is, the valve element sealing surface) functioning as the sealing portion at high pressure is not detached from the valve element. Therefore, it is possible to realize a reliable sealing state at high pressure.

It is also preferable that the check valve according to the present invention is used in a supply line for high-pressure hydrogen in a hydrogen station.

### Advantageous Effects of Invention

According to the present invention, it is possible to provide a check valve capable of performing sealing at extremely low pressure and high pressure while suppressing destruction of a sealing member.

### Brief Description of Drawings

Fig. 1 is a vertical cross-section view illustrating a schematic configuration of a check valve according to the present embodiment.
Fig. 2 is a vertical cross-sectional view illustrating a sleeve illustrated in Fig. 1.
Fig. 3 is a vertical cross-sectional view illustrating a poppet valve element illustrated in Fig. 1.
Fig. 4 is a vertical cross-sectional view illustrating an open valve state of the check valve illustrated in Fig. 1.
Fig. 5(A) is a vertical cross-sectional view illustrating a sealing state at extremely low pressure, and Fig. 5(B) is a vertical cross-sectional side view illustrating a sealing state at high pressure.
Fig. 6 is an enlarged cross-sectional view of a circle E illustrated in Fig. 5.
Fig. 7 is an enlarged cross-sectional view illustrating a schematic configuration near a sheet according to a first modification of a poppet valve element.
Fig. 8 is an enlarged cross-sectional view illustrating a schematic configuration near a sheet according to a second modification of a poppet valve element.
Fig. 9 is an enlarged cross-sectional view illustrating a schematic configuration near a sheet according to a third modification of a poppet valve element.
Fig. 10 is a perspective view illustrating a schematic configuration of a poppet valve element according to a fourth modification when seen from a valve element sealing surface.
Fig. 11(A) is a vertical cross-sectional side view illustrating a sealing state at extremely low pressure according to a fifth modification, and Fig. 11(B) is a vertical cross-sectional side view illustrating a sealing state at high pressure according to the fifth modification.
Fig. 12 is an enlarged cross-sectional view illustrating a schematic configuration near an O-ring according to a modification (a sixth modification) of the poppet valve element illustrated in Fig. 11.
Fig. 13 is a vertical cross-sectional side view illustrating a schematic configuration near a poppet valve element according to a seventh modification.
Fig. 14(A) is a schematic perspective view of the poppet valve element illustrated in Fig. 13 and Fig. 14(B) is a schematic cross-sectional view of the poppet valve element illustrated in Fig. 13.
Fig. 15 is a diagram for describing the flow of fluid near a valve seat occurring immediately before a sealing state is created at high pressure.
Fig. 16 is a block diagram illustrating a hydrogen station.
Fig. 17 is a diagram for describing a configuration of a compressor illustrated in Fig. 16.

### Description of Embodiments

Hereinafter, an embodiment of the present invention will be described with reference to the accompanying drawings. The following description of a preferred embodiment is an example only, and is not intended to limit the present invention, the application thereof or the use thereof.

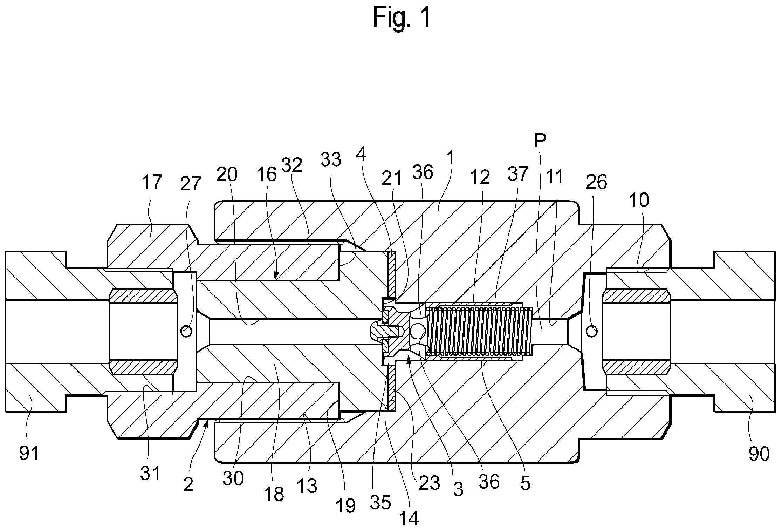

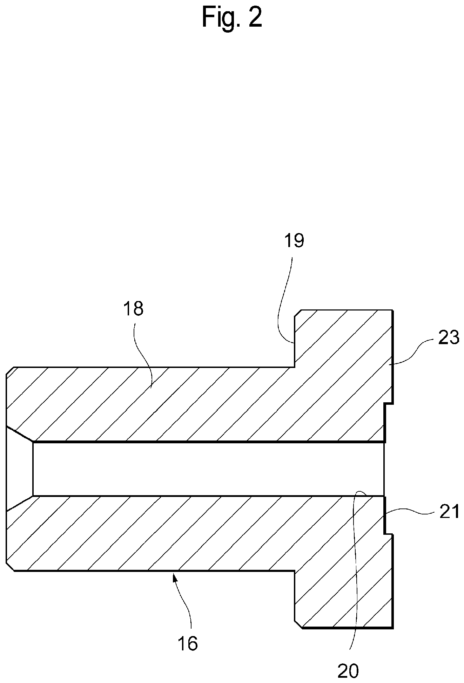

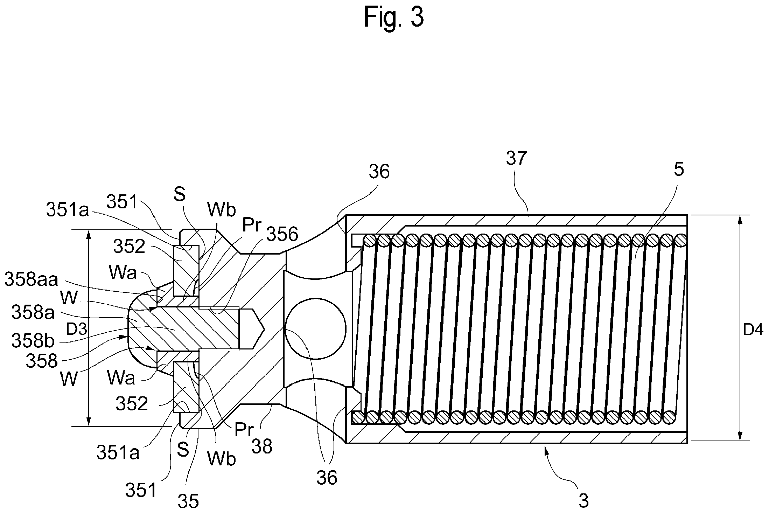

First, a configuration of a check valve of the present embodiment will be described. Fig. 1 is a vertical cross-sectional side view illustrating a schematic configuration of a check valve. Fig. 2 is a vertical cross-sectional side view of a sleeve illustrated in Fig. 1. Fig. 3 is a vertical cross-sectional side view of a poppet valve element illustrated in Fig. 1.

A check valve has a function of enabling fluid to flow from a primary side to a secondary side and restricting the flow in the reverse direction. As illustrated in Fig. 1, the check valve of the present embodiment includes a body 1, a cap element 2, a poppet valve element 3 (a valve element), a gasket 4, and a spring 5.

The body 1 is formed in an approximately cylindrical form and has a fluid passage P formed therein so that fluid can circulate therethrough. The body 1 is formed from a metal material such as, for example, a stainless alloy.

A pipe joining portion 10 formed of a female screw portion is formed on one end side (the right side in Fig. 1) of the body 1, and a male screw portion 90 of an external joint can screw into the pipe joining portion 10. A small diameter hole 11 is formed continuous to the pipe joining portion 10, and a valve element accommodating portion 12 having a larger diameter than the small diameter hole 11 is formed to communicate with the small diameter hole 11. Moreover, a female screw portion 13 is formed continuous to the valve element accommodating portion 12. The poppet valve element 3 is arranged in the valve element accommodating portion 12, and a cap 17 to be described later is connected to the female screw portion 13. An opening-side end surface 14 is formed on a side closer to an opening side than the valve element accommodating portion 12 of the body 1, and the gasket 4 can be attached to the opening-side end surface 14. Moreover, an inspection hole 26 for airtightness inspection is formed between the small diameter hole 11 and the pipe joining portion 10 of the body 1.

The cap element 2 is connected to the other end side (the left side in Fig. 1) of the body 1, and the cap element 2 includes a sleeve 16 and the cap 17.

### (Sleeve)

As illustrated in Fig. 2, the sleeve 16 has a cylindrical portion 18 and a stepped surface 19 having a larger diameter than the cylindrical portion 18 and has a passage 20 formed therein and communicating with the valve element accommodating portion 12 of the body 1. A valve seat 21 is formed on a distal end side which is a surface facing the poppet valve element 3 of the sleeve 16. A distal end surface 23 is positioned closer to an outer diameter side than the valve seat 21, and the distal end surface 23 faces the opening-side end surface 14 of the body 1 with the gasket 4 disposed therebetween when the sleeve 16 is attached to the body 1. The sleeve 16 is formed from a metal material, and in the present embodiment, is formed from a stainless alloy.

### (Cap)

The cap 17 is formed from the same stainless alloy as the body 1, for example, an insertion hole portion 30 is formed in the cap 17, and a pipe joining portion 31 formed of a female screw portion is formed continuous to the insertion hole portion 30. A male screw portion 91 of an external joint can screw into the pipe joining portion 31 similarly to the female screw of the body 1. A male screw portion 32 that can screw into the female screw portion 13 is formed on a body attachment side of the cap 17, the cap 17 is attached to the body 1 by screwing the male screw portion 32 therein. An end surface 33 for pressing the sleeve is formed on a side of the cap 17 close to the sleeve 16. An inspection hole 27 for input screen is formed between the insertion hole portion 30 and the pipe joining portion 31 of the cap 17.

When the cap element 2 is attached to the body 1, the cap 17 is coupled with the body 1 with the gasket 4 disposed therebetween so that the stepped surface 19 of the sleeve 16 is pressed by the end surface 33 of the cap 17. The sleeve 16 is attached to the cap 17 so that the cylindrical portion 18 is inserted into the insertion hole portion 30.

As described above, the gasket 4 is disposed between the opening-side end surface 14 of the body 1 and the distal end surface 23 of the sleeve 16, and the gasket 4 is clamped when the female screw portion 13 of the body 1 and the male screw portion 32 of the sleeve 16 are coupled with each other. The gasket 4 has a function of preventing leakage between the body 1 and the sleeve 16 and is formed from copper or a copper alloy, for example.

### (Poppet Valve Element)

Next, a configuration of the poppet valve element 3 will be described. Fig. 3 is a vertical cross-sectional side view of the poppet valve element 3. The poppet valve element 3 is fitted into the valve element accommodating portion 12 of the body 1 illustrated in Fig. 1 with the spring 5 disposed therebetween.

The poppet valve element 3 is provided in the valve element accommodating portion 12 of the body 1 so as to freely reciprocate, and a distal end side thereof moves closer to and away from the valve seat 21 to open and block the fluid passage P. When the poppet valve element 3 is biased in the direction toward the sleeve 16 by the spring force of the spring 5 and the distal end portion (a valve element sealing surface or a sheet to be described later) of the poppet valve element 3 makes contact with the valve seat 21, the fluid passage P is sealed. In the present embodiment, as illustrated in Fig. 3, the poppet valve element 3 includes a head 35 and a cylindrical portion 37.

The cylindrical portion 37 is provided continuously in the axial direction of the head 35 and has a passage hole 36 that passes through the cylindrical portion 37. Four passage holes 36 are disposed every 90° in a radial direction so as to pass through the poppet valve element 3. In a valve opening state, a primary-side passage (in Fig. 1, a passage (a passage close to the sleeve 16) of the fluid passage P, formed on a side closer to the upstream side than the valve seat 21) and a secondary-side passage (in Fig. 1, a passage (a passage close to the valve element accommodating portion 12) of the fluid passage P, formed on a side closer to the downstream side than the valve seat 21) can communicate with each other through the passage hole 36.

The head 35 has a valve element sealing surface 351 formed on the distal end side so as to make contact with the valve seat 21 of the sleeve 16. The valve element sealing surface 351 moves closer to and away from the valve seat 21 so that a portion thereof blocks or opens the valve seat 21. In the present embodiment, the valve element sealing surface 351 makes contact with the valve seat 21 when the poppet valve element 3 moves toward the primary side (the left side in Fig. 1) at high pressure. The valve element sealing surface 351 may be a planar surface and is preferably inclined in a direction (the right side in Fig. 1) away from the valve seat 21 as the valve element sealing surface 351 extends toward the outer circumference side. In other words, the valve element sealing surface 351 is preferably inclined in a direction toward the secondary side from the primary side as the valve element sealing surface 351 extends toward the outer circumference side. By doing so, when the valve element sealing surface 351 makes contact with the valve seat 21, it is possible to further decrease a contact area thereof (that is, it is possible to prevent backflow in the fluid passage P with line contact). Therefore, it is possible to enhance the sealing performance as compared to a configuration in which a sealing state is created by surface-contact. An outer diameter D3 of the head 35 and an outer diameter D4 of the cylindrical portion 37 are set in the relation of D3<D4. A connecting portion (a valley portion) positioned between the head 35 and the cylindrical portion 37 of the present embodiment has a smaller diameter than the outer diameter D3 of the head 35. Due to this, a concave portion is formed in an outer circumference 38 of the poppet valve element 3 and fluid is guided efficiently.

In the present embodiment, the expression "the valve element sealing surface 351 makes contact with the valve seat 21" is not limited to a state in which an entire surface of the valve element sealing surface 351 makes contact with the valve seat 21 but also includes a state in which a portion of the valve element sealing surface 351 makes contact with the valve seat 21.

### (Sheet)

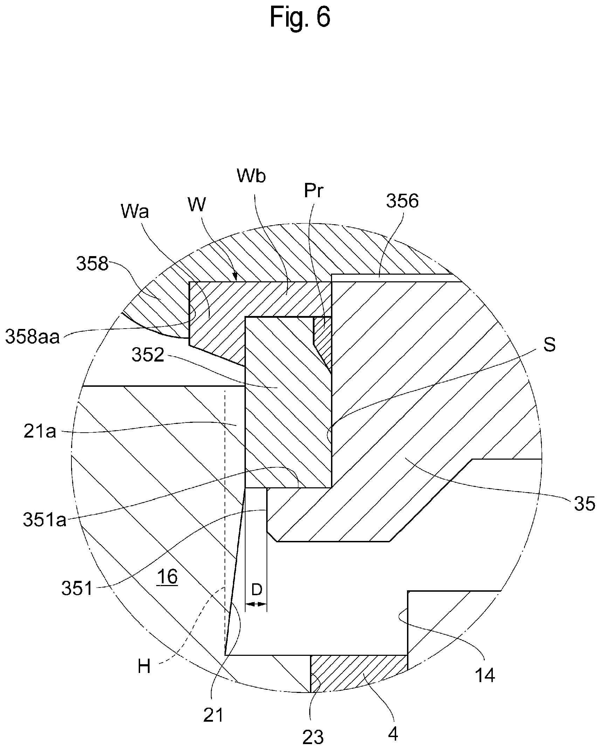

A sheet accommodating portion 351a is formed in the valve element sealing surface 351 of the head 35 in a state of being depressed from the surface, and a sheet (a sealing member) 352 is provided in the sheet accommodating portion 351a. The sheet 352 moves closer to and away from the valve seat 21 with the movement of the poppet valve element 3 to block or open the valve seat 21. In the present embodiment, the sheet 352 is provided so that a distal end side thereof protrudes by a predetermined amount (a distance D in Fig. 6) closer to the valve seat 21 than the valve element sealing surface 351. Since the sheet 352 protrudes by a predetermined amount in this manner, although the sheet 352 is compressively deformed by being pressed by the valve seat 21 at high pressure, the poppet valve element 3 makes contact with the valve seat 21 immediately after that and further compressive deformation is prevented. Therefore, irreversible deformation (plastic deformation) of the sheet 352 does not occur, and as a result, even if this operation is repeated, a sufficient sealing performance is maintained at extremely low pressure (for example, 0.1 MPa or lower) and high pressure. In the present embodiment, a protruding amount D of the sheet 352 is preferably from 0.3 mm to 0.5 mm.

The sheet 352 is formed from a material (a soft material) having a lower hardness than the material of the poppet valve element 3, and in the present embodiment, is formed from a resin material, for example. Although the sheet 352 has a distal end having a planar shape in the present embodiment, the shape is not limited to the illustrated example, the shape and the size, and the like are selected appropriately as long as it has a function of moving closer to and away from the valve seat 21 to block and open the valve seat 21.

The sheet 352 is fixed to the poppet valve element 3 by a screw 358 screwed into a female screw portion 356 formed in the valve element sealing surface 351 of the poppet valve element 3. A guide member W is provided around a cylindrical portion 358b of the screw 358.

### (Guide Member)

The guide member W has a function of suppressing collapsing of the sheet 352 due to the excessive fastening of the screw 358. The guide member W is formed in an approximately cylindrical shape so that the screw 358 can be inserted therein. Specifically, as illustrated in Fig. 3, the guide member W has a body portion Wb of the cylinder and an extension portion Wa that bends approximately vertically toward the outer side (the direction away from the screw 358) from an upper end side (the side of a head seat 358aa) of the body portion Wb.

The body portion Wb is formed in a cylindrical form so as to cover the circumference of the cylindrical portion 358b of the screw 358. The body portion Wb is provided along an axial direction of the screw 358 so that a lower end thereof makes contact with a contact surface S between the poppet valve element 3 and the sheet 352 and an upper end thereof makes contact with the head seat 358aa. In other words, the body portion Wb is provided to extend by a distance equal to or greater than the thickness of the sheet 352 (the width in the left-right direction of the sheet 352 in Fig. 3) in the axial direction of the screw 358 from the contact surface S (that is, a position corresponding to the bottom surface of the sheet 352) of the poppet valve element 3 and the sheet 352 to support the head seat 358aa of the screw 358.

The extension portion Wa is provided on the upper end side of the body portion Wb. The extension portion Wa is provided between the head seat 358aa and the surface of the sheet 352 to support the head seat 358aa. Specifically, the extension portion Wa is formed in an approximately annular form in a plan view thereof so as to cover a portion of the surface of the sheet 352 close to the central shaft of the screw 358. The extension portion Wa is not limited to the illustrated shape but the shape thereof may be changed appropriately as long as it has a function of supporting the head seat 358aa of the screw 358.

Since the guide member W is formed around the screw 358 in this manner, when the screw 358 is fastened, the movement of the screw 358 in the fastening direction is restricted by the guide member W and the head 358a of the screw 358 is prevented from being pressed strongly against the sheet 352. As a result, it is possible to prevent the head 358a of the screw 358 from being pressed strongly against the surface of the sheet 352 due to the excessive fastening of the screw 358 and to prevent deformation of the sheet 352.

The shape and the size of the guide member W are not limited to the illustrated example but may be changed to other shapes as long as the guide member W has a function of suppressing collapsing of the sheet 352 due to the excessive fastening of the screw 358.

### (Convex Portion)

A convex portion Pr that protrudes toward the valve seat 21 (the left side in Fig. 3) from the contact surface S of the poppet valve element 3 and the sheet 352 is formed on a portion of the contact surface S close to the screw 358. Since an interval (an axial distance) between the convex portion Pr and the extension portion Wa of the guide member W is smaller than the thickness of the sheet 352, when the sheet 352 is disposed between the convex portion Pr and the extension portion Wa of the guide member W, it is possible to maintain a state in which the sheet 352 is pressed. Due to this, even when the sheet 352 collapses by being pressed by the valve seat 21 (that is, when the sheet 352 is plastically deformed), since the convex portion Pr is provided, when the sheet 352 makes contact with the valve seat 21, it is possible to apply a sufficient surface pressure to the contacting portion. As a result, even when the sheet 352 is plastically deformed, it is possible to maintain a sufficient sealing performance.

The shape and the size of the convex portion Pr are not limited to the illustrated example but may be changed to other shapes as long as the convex portion Pr has a function of pressing the sheet 352.

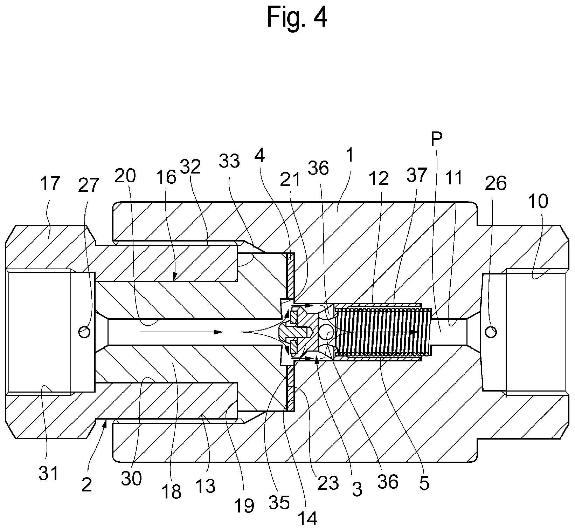

Next, an operation of the check valve having the above-described configuration will be described. Fig. 4 illustrates an open valve state of a check valve.

As illustrated in Fig. 4, when a high-pressure fluid flows from the left side, the poppet valve element 3 is pressed toward the right side by the fluid pressure while resisting the spring force of the spring 5. By doing so, the valve seat 21 of the sleeve 16 enters an open state, and as indicated by an arrow, the fluid flows from the passage 20 into the valve element accommodating portion 12 and is guided into the poppet valve element 3 through the passage hole 36, and flows toward the outer side of the body 1 than the small diameter hole 11 through the poppet valve element 3.

In Fig. 1, when fluid tries to flow back, the poppet valve element 3 is pressed toward the left side by the fluid pressure and the head 35 is pressed against the valve seat 21. In this case, a contact state between the poppet valve element 3 and the valve seat 21 changes depending on the magnitude of the backflow preventing pressure (that is, the pressure difference between the upstream side and the downstream side). This will be described in detail below.

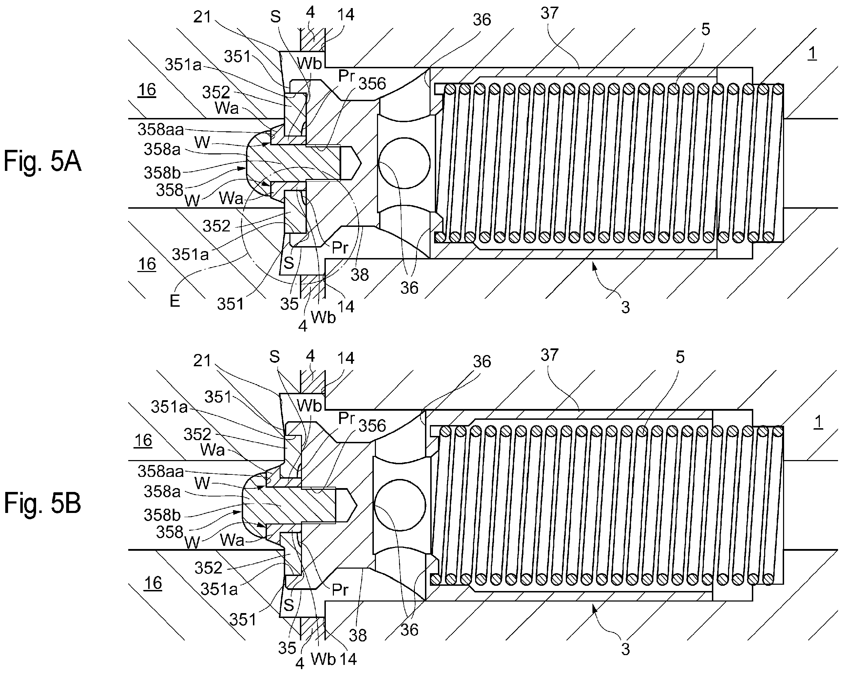

Fig. 5(A) is a vertical cross-sectional side view illustrating a sealing state at extremely low pressure. Fig. 5(B) is a vertical cross-sectional side view illustrating a sealing state at high pressure. Fig. 6 is an enlarged view of a circle E illustrated in Fig. 5(A).

### (At Extremely Low Pressure)

As illustrated in Fig. 5(A), at extremely low pressure, since the force that presses the poppet valve element 3 toward the sleeve 16 is weak, the valve element sealing surface 351 does not make contact with the valve seat 21 and the sheet 352 makes contact with the valve seat 21. In other words, at extremely low pressure, only the sheet 352 among the valve element sealing surface 351 and the sheet 352 makes contact with the valve seat 21 and a sealing state is created. The backflow pressure which can be sealed by the check valve of the present embodiment was 0.25 MPa to 0.26 MPa when the sheet 352 was formed from PTFE and was 0.14 MPa to 0.15 MPa when the sheet 352 was formed from EPDM. In contrast, when the poppet valve element 3 itself makes contact with the valve seat 21 to create a sealing state without using the sheet 352, a backflow pressure of approximately 9 MPa or higher was required. The sealable backflow pressure was measured by conducting a test of gradually changing the backflow pressure (the pressure from the secondary side to the primary side) applied to the check valve and measuring whether pressure exceeding an allowable leakage amount is detected on the primary side. The largest pressure at which leakage was not detected by this test was measured as the sealable backflow pressure.

### (At High Pressure)

On the other hand, at high pressure, as illustrated in Fig. 5(B), since the force that presses the poppet valve element 3 toward the sleeve 16 is strong, the sheet 352 is compressively deformed by making contact with the valve seat 21 whereby the valve element sealing surface 351 and the sheet 352 make contact with the valve seat 21 and a sealing state is created.

In this manner, at high pressure, since the valve element sealing surface 351 having a higher hardness than the sheet 352 makes contact with the valve seat 21, it is possible to suppress the amount of the sheet 352 being compressively deformed by the valve seat 21 at high pressure. In other words, a function of suppressing a deformation amount of the sheet 352 is realized by allowing the valve element sealing surface 351 to make contact with the valve seat 21. In this way, it is possible to prevent the sheet 352 from being elastically deformed by being pressed strongly against the valve seat 21, and as a result, it is possible to maintain a sealing performance at extremely low pressure and high pressure.

As illustrated in Fig. 6, in the present embodiment, a portion 21a of the valve seat 21 that makes contact with the sheet 352 is formed so as to swell toward the poppet valve element 3. Due to this, as compared to a configuration (see broken line H in Fig. 6) in which the valve seat 21 is a planar surface, the contact area when the sheet 352 makes contact with the valve seat 21 decreases, and the sheet 352 and the valve seat 21 can be brought into line contact. Due to the line contact, it is possible to increase the pressing force at the contact portion as compared to a case in which the fluid passage is sealed by surface-contact and to enhance the sealing performance.

Next, modifications of the poppet valve element illustrated in Figs. 1 to 6 will be described. Poppet valve elements of the modifications described below partially change the structure of the poppet valve element and the other configuration and function are the same as those of the poppet valve element. Therefore, the description of the same portions as those of the poppet valve element described above will be omitted.

### (First Modification)

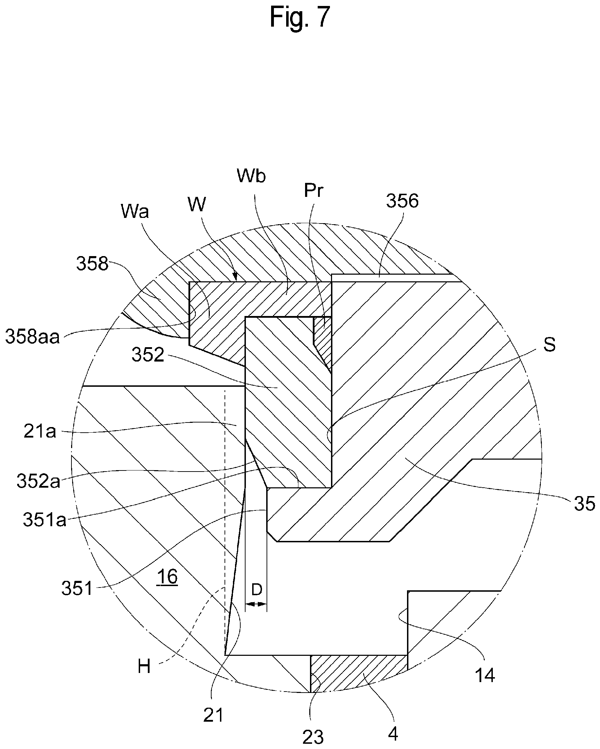

Fig. 7 is an enlarged cross-sectional view illustrating a schematic configuration near a sheet according to a first modification of the poppet valve element.

In the first modification illustrated in Fig. 7, a chamfer 352a is formed in the outer circumference of the sheet 352. The position of the chamfer 352a is preferably formed closer to the outer circumference side (the lower side in Fig. 7) than a portion of the sheet 352 that makes contact with the valve seat 21. When the chamfer 352a is formed in the sheet 352 to create a tapered surface, the sheet 352 and the valve seat 21 make more linear contact with each other and the contact pressure is improved. Therefore, it is possible to create a more reliable sealing state at extremely low pressure.

### (Second Modification)

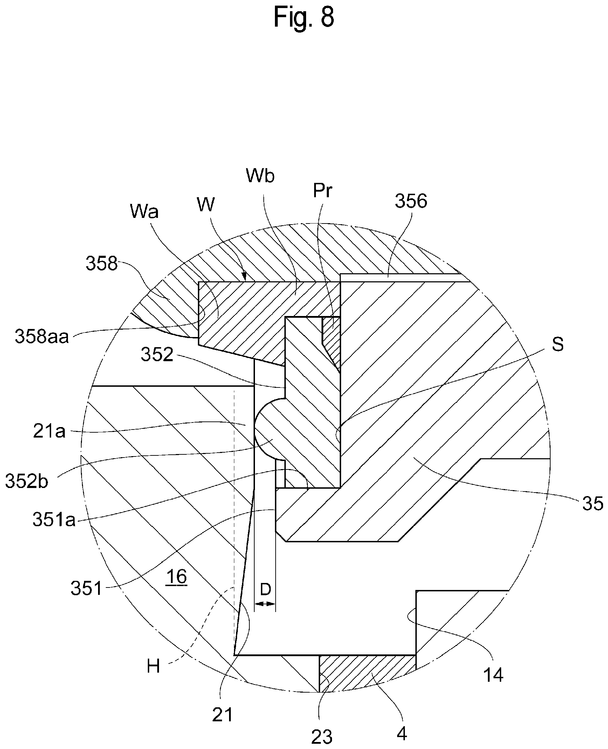

Fig. 8 is an enlarged cross-sectional view illustrating a schematic configuration near a sheet according to a second modification of the poppet valve element.

In the second modification illustrated in Fig. 8, a portion of the sheet 352 that makes contact with the valve seat 21 swells. Specifically, a convex portion 352b having a mountain shape in a cross-sectional view is formed on a portion of the sheet 352 that makes contact with the valve seat 21 so as to protrude toward the valve seat 21 from the surface of the sheet 352. By changing the shape on the surface of the sheet 352 in this manner, the sheet 352 and the valve seat 21 make more linear contact with each other and the contact pressure is improved. In the example illustrated in Fig. 8, although the convex portion 352b has a curved surface that is convex in a cross-sectional view, the shape is not limited thereto, and the shape and the like may be changed appropriately as long as it has a function of bringing the sheet 352 into linear contact with the valve seat 21 to improve the contact pressure.

### (Third Modification)

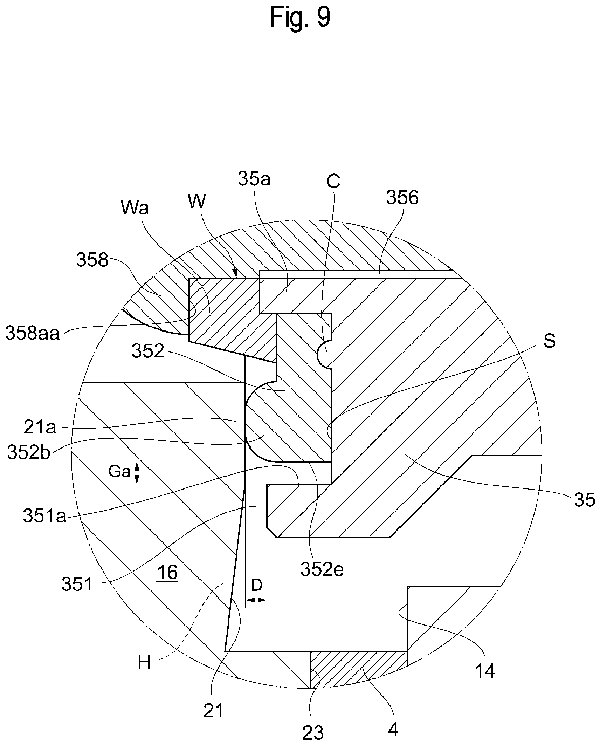

Fig. 9 is an enlarged cross-sectional view illustrating a schematic configuration near a sheet according to a third modification of the poppet valve element.

In the third modification, a projection C that protrudes toward the valve seat 21 (the left side in Fig. 9) is provided on a contact surface S (that is, the bottom surface of the sheet accommodating portion 351a) of the poppet valve element 3 that makes contact with the sheet 352. Although pressure may go around the rear side of the sheet 352 and the sheet 352 may burst into the passage at high pressure particularly, in order to prevent this, the projection C is provided so that the sheet 352 is caught at the projection C in the third modification. When the projection C is provided in this manner, it is possible to suppress the shift of the sheet 352 to prevent dropping of the sheet 352. The shape of the projection C is not limited to the illustrated example, and the shape, the size, and the like may be changed appropriately as long as the projection C has a function of catching the sheet 352.

In the third modification, as illustrated in Fig. 9, a gap Ga is formed on the outer circumference of the sheet 352. Specifically, the gap Ga is formed between an outer end 352e of the sheet 352 and a side surface (an inner wall of the poppet valve element 3) of the sheet accommodating portion 351a. Although the size of the gap Ga is set arbitrarily, the size is set to approximately 0.5 mm plus a dimensional error of the sheet 352, for example. Since the gap Ga is formed on the outer circumference side of the sheet 352 in this manner, when the sheet 352 is pressed by being brought into pressure-contact with the valve seat 21, the sheet 352 can escape toward the outer circumference side, and the poppet valve element 3 can make reliable contact with the valve seat 21 at high pressure.

In the third modification, as illustrated in Fig. 9, an extension portion 35a is provided so as to be extended in the axial direction of the screw 358 from a portion (the female screw portion 356) of the poppet valve element 3 into which the male screw portion (not illustrated) of the screw 358 screws. In this way, it is possible to extend the length of a portion of the poppet valve element 3 at which the screw 358 is caught and to prevent dropping of the screw 358 at high pressure. When the extension portion 35a illustrated in Fig. 9 is provided, the guide member W is positioned between the upper surface of the extension portion 35a and the head seat 358aa of the screw 358 and is provided to cover a surface of the sheet 352 close to the shaft of the screw 358. Such a guide member W has a function similar to the function of the guide member W described above with reference to Fig. 6 and the like.

Although polyether ether ketone (PEEK), for example, is used as a material of the poppet valve element 3, preferably, stainless steel (for example, SUS 316 or the like) is used. When stainless steel is used, it is possible to improve the strength of the poppet valve element 3 and to prevent dropping of the screw 358 more reliably.

### (Fourth Modification)

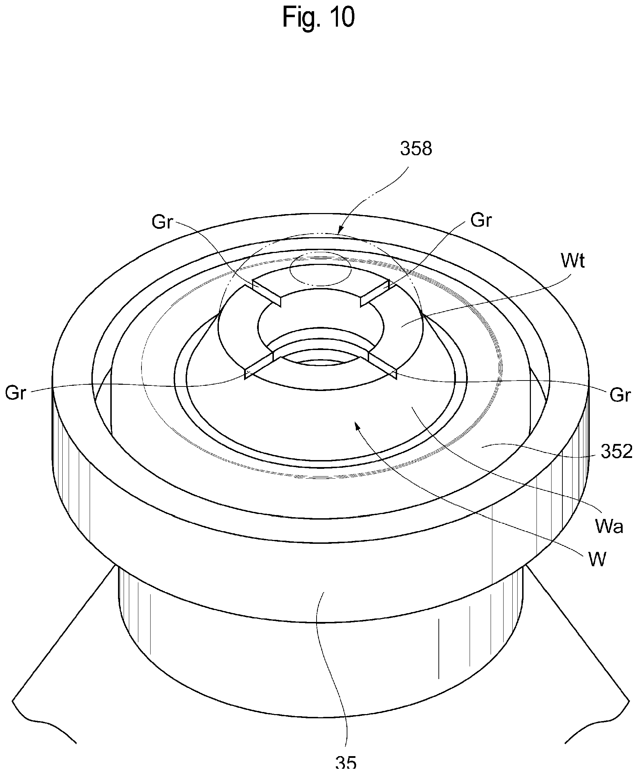

Fig. 10 is a perspective view illustrating a schematic configuration when a poppet valve element of a fourth modification is seen from a valve element sealing surface.

In the fourth modification, as illustrated in Fig. 10, a plurality of grooves Gr is formed in a surface (an upper surface Wt in Fig. 10) of the guide member W that makes contact with the head seat 358aa (see Fig. 5 and the like) of the screw 358. This groove Gr functions as a pressure bypass hole through which the pressure applied in a removal direction (the left side in Fig. 10) of the screw 358 escapes at high pressure. In the present embodiment, a plurality of grooves Gr are formed in a slit form in a direction toward the outer side from the side of the upper surface Wt close to the shaft of the screw 358. However, the groove Gr is not limited to this example, only one groove Gr may be formed, and the shape, the number, and the up-down relation of the groove Gr of the present embodiment may be changed as long as the groove Gr functions as a pressure bypass hole.

### (Fifth Modification)

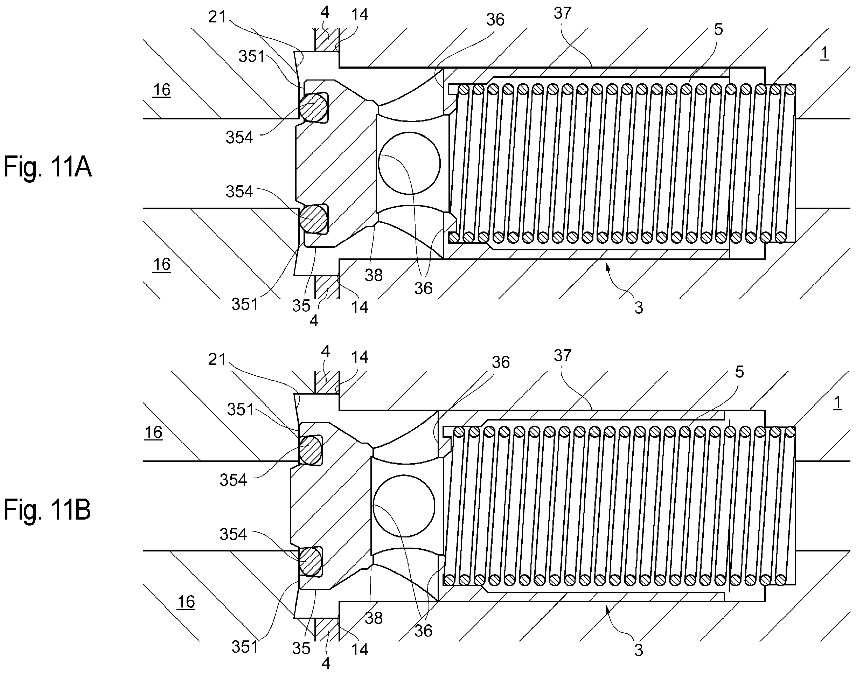

Next, a fifth modification of the poppet valve element will be described. Fig. 11(A) is a vertical cross-sectional side view illustrating a sealing state at extremely low pressure according to the fifth modification. Fig. 11(B) is a vertical cross-sectional side view illustrating a sealing state at high pressure according to the fifth modification. The poppet valve element 3 illustrated in Fig. 11 has an O-ring 354 instead of the sheet 352 of the poppet valve element 3 illustrated in Fig. 5 and the like, and the other configuration and function thereof are the same as those of the poppet valve element 3 illustrated in Fig. 5 and the like. Therefore, the description of the same portions as those of the poppet valve element 3 illustrated in Fig. 5 and the like will be omitted.

### (At Extremely Low Pressure)

As illustrated in Fig. 11(A), at extremely low pressure, the valve element sealing surface 351 does not make contact with the valve seat 21, and the O-ring 354 provided on the distal end of the poppet valve element 3 makes contact with the valve seat 21. That is, at extremely low pressure, only the O-ring 354 among the valve element sealing surface 351 and the O-ring 354 makes contact with the valve seat 21 and a sealing state is created.

### (At High Pressure)

On the other hand, at high pressure, as illustrated in Fig. 11(B), the O-ring 354 is compressively deformed by making contact with the valve seat 21 whereby the valve element sealing surface 351 and the O-ring 354 make contact with the valve seat 21. In this way, advantages similar to those of the configuration in which the sheet 352 is provided in the poppet valve element 3 described with reference to Fig. 5 and the like are obtained. That is, it is possible to prevent the O-ring 354 from being plastically deformed and to maintain a sealing performance at extremely low pressure and high pressure.

### (Sixth Modification)

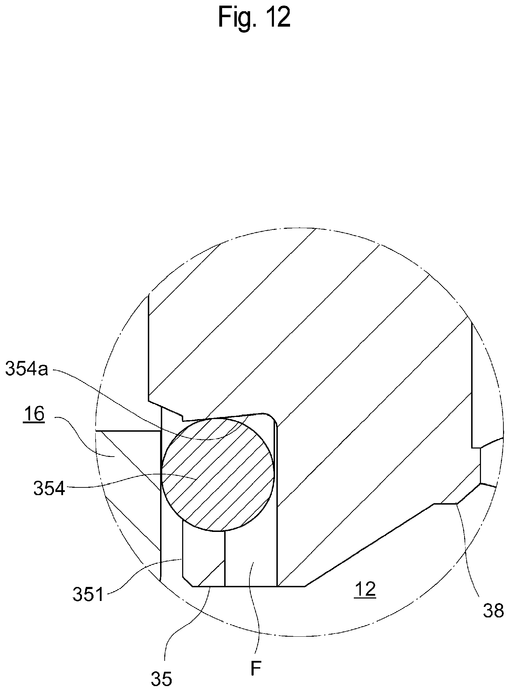

Fig. 12 is an enlarged cross-sectional view illustrating a schematic configuration near an O-ring according to a modification (a sixth modification) of the poppet valve element illustrated in Fig. 11.

In the sixth modification, as illustrated in Fig. 12, a hole F for releasing the pressure applied to the O-ring 354 is formed. This hole F is formed in the head 35 so that an O-ring accommodating portion 354a that accommodates the O-ring 354 communicates with the outside (the valve element accommodating portion 12), and the fluid in the O-ring accommodating portion 354a flows toward the outside through the hole F. In this way, the pressure in the O-ring accommodating portion 354a decreases, the pressure applied in the removal direction of the O-ring 354 is suppressed, and dropping of the O-ring 354 can be prevented. The shape of the hole F is not limited to the illustrated shape, and the shape and the like may be changed as long as the hole F has a function of suppressing the pressure applied in the removal direction of the O-ring 354.

### (Seventh Modification)

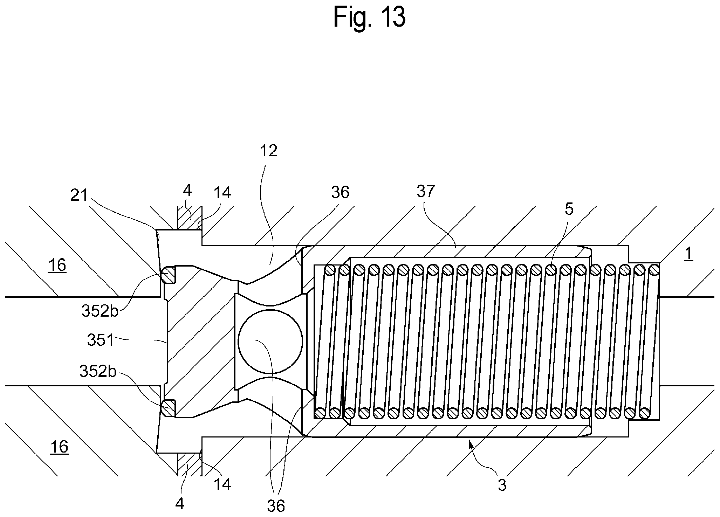

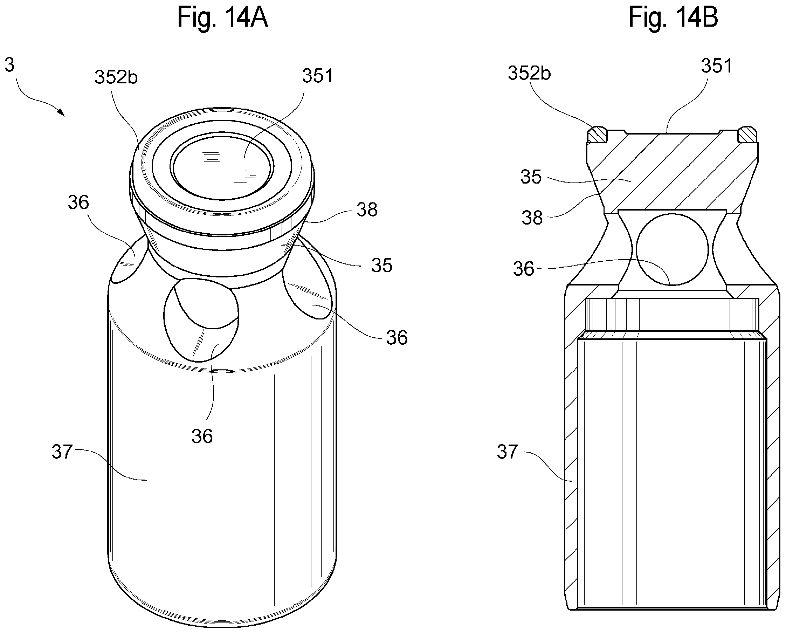

Next, a seventh modification of the poppet valve element will be described with reference to Figs. 13 and 14. Fig. 13 is a vertical cross-sectional side view illustrating a configuration near a poppet valve element according to the seventh modification. Fig. 14(A) is a schematic perspective view of the poppet valve element according to the seventh modification and Fig. 14(B) is a schematic cross-sectional view of the poppet valve element illustrated in Fig. 14(A). The poppet valve element 3 of the seventh modification changes the structure on the head side of the poppet valve element 3 illustrated in Fig. 5 and the like, and the other configuration and function are the same as those of the poppet valve element 3 illustrated in Fig. 5 and the like. Therefore, the description of the same portions as those of the poppet valve element 3 illustrated in Fig. 5 and the like will be omitted.

In the seventh modification, a sheet 352b illustrated in Figs. 13 and 14 is pressure-bonded to the poppet valve element 3 so as to protrude toward the valve seat 21 from the valve element sealing surface 351 and is provided to cover the outer circumference of the valve element sealing surface 351 having an approximately circular shape in a plan view. As for the position of the sheet 352b, specifically, the sheet 352b is provided closer to the outer circumference (that is, the outer circumference than a portion (a portion of the valve element sealing surface 351) of the poppet valve element 3 that makes contact with the valve seat 21 only at high pressure) than the portion, excluding the sheet 352b, of the poppet valve element 3, the portion being contactable with the valve seat 21. In other words, when the distal end side (that is, the valve element sealing surface 351) of the poppet valve element 3 makes contact with the valve seat 21, the sheet 352b is provided so as to make contact with a position located closer to the outer circumference than a position at which the valve element sealing surface 351 makes contact with the valve seat 21.

Pressure-bonding of the sheet 352b is realized by forming the sheet 352b directly at a position at which the sheet 352b of the poppet valve element 3 is to be formed using a portion of the poppet valve element 3 as a mold. For example, pressure-bonding can be performed by applying an adhesive for pressure-bonding to a forming position of the sheet 352b of the poppet valve element 3, assembling another mold with the poppet valve element 3, and supplying a raw material to the forming position of the sheet 352b. The sheet 352b may not necessarily be formed by pressure-bonding but may be formed by insert-molding, and the sheet 352b may be molded by another method and be fixed to the poppet valve element 3 by an adhesive or the like. However, the sheet 352b formed by pressure-bonding is tightly fixed to the poppet valve element 3 and is less easily detached at high pressure than other methods.

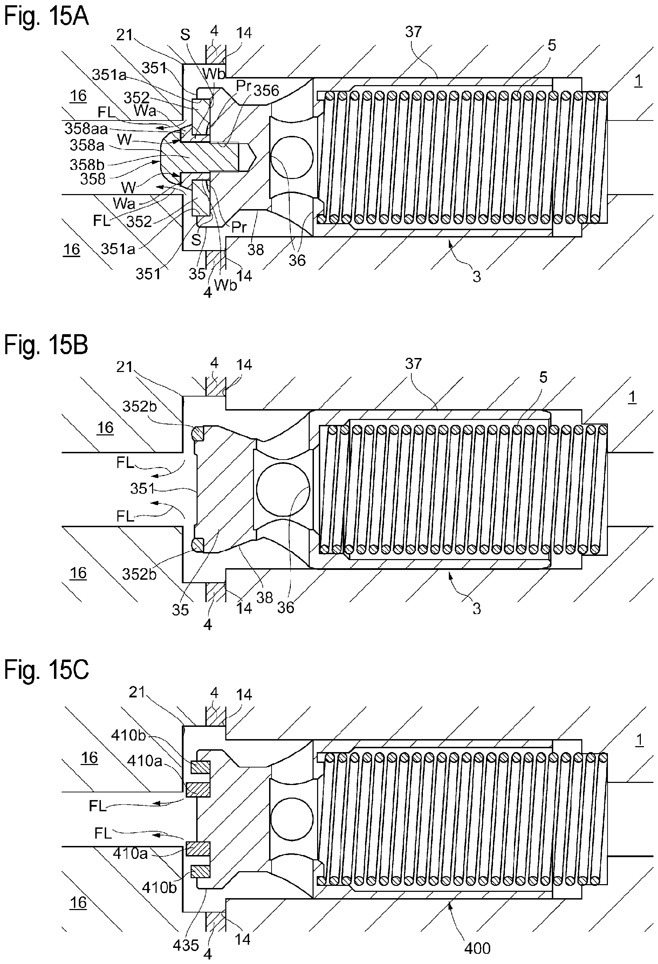

However, at high pressure, immediately before and after sealing is created (that is, immediately before the poppet valve element 3 makes contact with the valve seat 21), force (for example, arrow FL illustrated in Fig. 15) of pulling from the secondary side (the passage side in the valve element accommodating portion 12 of the fluid passage formed inside the body 1 (see Fig. 1)) toward the primary side (the passage side in the sleeve 16 of the fluid passage formed inside the body 1) is abruptly applied near the valve seat 21. In this case, in a poppet valve element 400 having the structure illustrated in Fig. 15(C), for example, since a sealing member 410a is positioned on the inner side than a sealing member 410b that makes contact with the valve seat 21 only at high pressure among the sealing members 410a and 410b attached to the distal end of the poppet valve element 400, the sealing member 410a is pulled toward the primary side by the force of pulling from the secondary side toward the primary side occurring immediately before and after sealing at high pressure and the sealing member 410a may be detached.

The poppet valve element 400 illustrated in Fig. 15(C) has the sealing members 410a and 410b provided at the distal end of the head 435 as separate members from the head 435, and the sealing members 410a and 410b move closer to and away from the valve seat 21 to open and block the fluid passage.

In contrast to the poppet valve element 400 illustrated in Fig. 15(C), in the present embodiment (the poppet valve element 3 illustrated in Fig. 15(B), for example), the sheet 352b is provided closer to the outer circumference than a portion (that is, a portion of the poppet valve element 3 that makes contact with the valve seat 21 only at high pressure) excluding the sheet 352b, of the poppet valve element 3, the portion being contactable with the valve seat 21. According to this configuration, when the poppet valve element 3 makes contact with the valve seat 21 at high pressure, a portion in which the poppet valve element 3 and the valve seat 21 make contact with each other is present on the inner side than the sheet 352b, and this portion functions as a sealing portion. At high pressure, the force (the arrow FL illustrated in Fig. 15(B)) of pulling from the secondary side toward the primary side increases near the valve seat 21 immediately before sealing is realized. However, particularly, immediately after sealing is realized, the force of pulling toward the primary side is generated abruptly on the inner side of the sealing portion between the poppet valve element 3 and the valve seat 21. In this case, since the sheet 352b is present on the outer side (the outer circumference side) than the sealing portion, the sheet 352b does not receive the force of pulling toward the primary side and is not easily detached from the poppet valve element 3. As for the force indicated by the arrow FL immediately before sealing is realized, since a portion of the poppet valve element 3 that makes contact with the valve seat 21 is present on the inner side of the sheet 352b (that is, the sheet 352b is provided on the outer-side portion (the outer circumference side) of the portion of the valve element that makes contact with the valve seat), pulling of the sheet 352b is inhibited in this portion, and detachment of the sheet 352b from the poppet valve element 3 can be prevented.

On the other hand, in the poppet valve element 3 illustrated in Fig. 15(A), the sheet 352 is provided on the inner side than a portion (that is, the valve element sealing surface 351 making contact with the valve seat 21 only at high pressure) excluding the sheet 352, of the poppet valve element 3, the portion being contactable with the valve seat 21. Therefore, the force of pulling toward the primary side is applied to the sheet 352 immediately before and after sealing is realized at high pressure. However, in the poppet valve element 3 illustrated in Fig. 15(A), since the sheet 352 is fixed by the screw 358 and the guide member W, it is possible to prevent detachment of the sheet 352 at high pressure.

According to the poppet valve element 3 of the present embodiment, since the sheet 352 or 352b makes contact with the valve seat 21 at low pressure and the sheet 352 or 352b and the valve element sealing surface 351 make contact with the valve seat 21 at high pressure while preventing detachment of the sheet 352 or 352b at high pressure. Therefore, it is possible to reliably seal the fluid passage at both low pressure and high pressure.

Particularly, as in the examples illustrated in Figs 15(A) and 15(B), if the poppet valve element 3 is formed integrally from the same material as the valve element sealing surface 351, since the valve element sealing surface 351 functioning as a sealing portion at high pressure is not detached from the poppet valve element 3, it is possible to realize a reliable sealing state at such high pressure (99 MPa) as expected in a hydrogen station, for example. In contrast, as in the example illustrated in Fig. 15(C), if the sealing members 410a and 410b are separate members from the poppet valve element 400, the sealing members 410a and 410b may be detached from the poppet valve element 400 even if it is not immediately before or after sealing of the poppet valve element 400. Moreover, the detachment of the sealing member 410a is likely to occur at high pressure particularly due to the force indicated by the arrow FL immediately before sealing is realized, and a sufficient sealing performance may not be obtained at high pressure.

In the example illustrated in Fig. 15(A), since the poppet valve element 3 is formed integrally with the valve element sealing surface 351 functioning as a sealing portion at high pressure, it is easy to fix the screw 358 to the poppet valve element 3. Since the screw 358 is tightly fixed to the poppet valve element 3, the screw 358 is not removed at high pressure and can hold the sheet 352. Moreover, in the example illustrated in Fig. 15(B), the poppet valve element 3 is formed integrally from the same material as the valve element sealing surface 351 functioning as the sealing portion at high pressure. Therefore, the poppet valve element 3 is ideally used as a mold when the sheet 352b is pressure-bonded and is advantageously used for forming the sheet 352b by pressure-bonding.

Tests were conducted to verify the sealing performance (high-pressure sealing performance and low-pressure sealing performance) when the poppet valve element 3 of the present embodiment described above was used. As a high-pressure sealing performance test, a pressure difference between the primary-side passage and the secondary-side passage was set approximately to 99 [MPa] and a leakage amount when the fluid passage was sealed by the poppet valve element was measured. As a low-pressure sealing performance test, a pressure difference between the primary-side passage and the secondary-side passage was set approximately to 0.1 [MPa] and a leakage amount when the fluid passage was sealed by the poppet valve element was measured.

As a result of conducting a high-pressure sealing performance test (where the pressure difference was set to 99 [MPa]) and a low-pressure sealing performance test (where the pressure difference was set to 0.10 [MPa]) using the poppet valve element 3 (the poppet valve element 3 in which the sheet 352 is fixed to the head 35 by the screw 358 and the guide member W) described with reference to Figs. 1 to 10, it was confirmed that the leakage amount measured by the water substitution technique was 0.0 [cc/min]. Moreover, as a result of conducting a high-pressure sealing performance test (where the pressure difference was set to 99.08 [MPa] or 99.95 [MPa]) and a low-pressure sealing performance test (where the pressure difference was set to 0.09 [MPa] or 0.1 [MPa]) using the poppet valve element 3 (the poppet valve element 3 in which the sheet 352b is pressure-bonded to the outer circumference of the valve element sealing surface 351) described with reference to Figs. 13 to 15, it was confirmed that the leakage amount measured by the water substitution technique was 0.0 [cc/min]. That is, it was verified that the poppet valve element 3 of the present embodiment can secure a sufficient sealing performance over a wide pressure difference range from approximately 0.1 [MPa] to 100 [MPa] (that is, from extremely low pressure to high pressure).

**A** test (hereinafter referred to as a lowest-pressure sealing test) was conducted to verify the sealing performance of the poppet valve element 3 of the present embodiment at a pressure difference of 0.1 [MPa] or smaller. The lowest-pressure sealing test involves gradually pressurizing the secondary side of the fluid passage formed in the body 1 (Fig. 1) and measuring the lowest pressure value at which a sealing state is created by the poppet valve element 3. As a result of conducting the lowest-pressure sealing test several times using the poppet valve element 3 (the poppet valve element 3 in which the sheet 352 is fixed to the head 35 by the screw 358 and the guide member W) described with reference to Figs. 1 to 10, it was confirmed that the measured lowest pressure value was 0.06 [MPa] and 0.08 [MPa]. As a result of conducting the lowest-pressure sealing test several times using the poppet valve element 3 (the poppet valve element 3 in which the sheet 352b is pressure-bonded to the outer circumference of the valve element sealing surface 351) described with reference to Figs. 13 to 15, it was confirmed that the measured lowest pressure value was 0.04 [MPa] and 0.06 [MPa]. That is, it was verified that the poppet valve element 3 of the present embodiment can realize a sealing state even when the pressure difference between the primary-side passage and the secondary-side passage was lower than 0.1 [MPa].

As a comparative example, a low-pressure sealing performance test was conducted on a poppet valve element which does not use the sheet 352 (a sealing member) illustrated in Fig. 5 and the like (that is, the poppet valve element of the comparative example is a valve element in which a portion (the valve element sealing surface) formed from the same material as the poppet valve element makes contact with the valve seat to seal the fluid passage at low pressure and high pressure). As a result of conducting the low-pressure sealing performance test (where the pressure difference was set to 6.06 [MPa] or 7.90 [MPa]), it was confirmed that the leakage amount was 0.55 [cc/min] and 0.13 [cc/min]. That is, in the poppet valve element which does not use the sealing member, verified as the comparative example, it was confirmed that it was not possible to prevent backflow of fluid at low pressure.

### (Hydrogen Station)

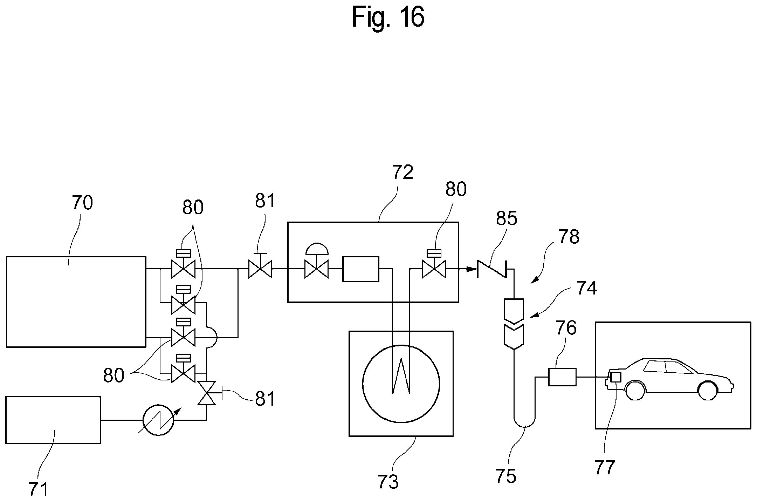

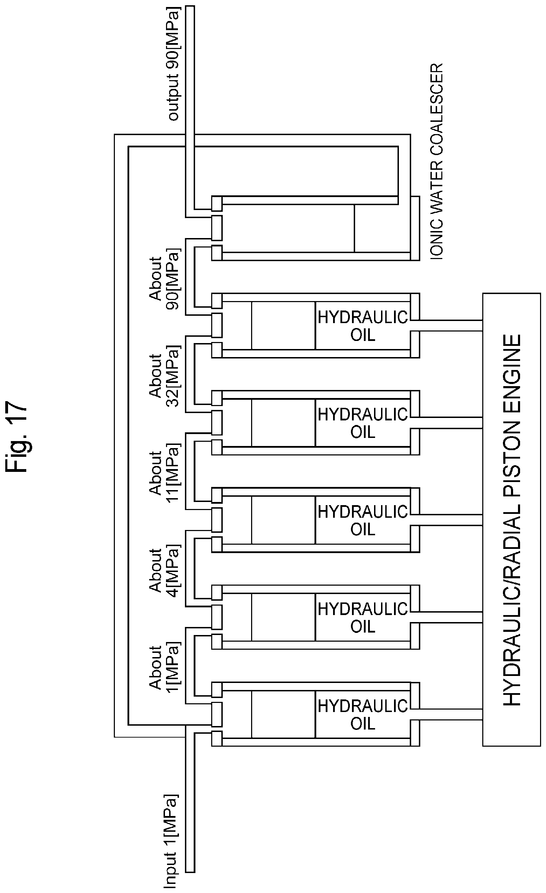

Next, an example in which the check valve according to the present embodiment is applied to a hydrogen station will be described. Fig. 16 is a block diagram of a hydrogen station. Fig. 17 is a diagram for describing a configuration of a compressor of the hydrogen station illustrated in Fig. 17.

**As** illustrated in Fig. 16, the hydrogen station includes a pressure accumulator 70, a compressor 71, a dispenser 72, a pre-cool heat exchanger 73, a quick coupling unit 74, a filling hose 75, a filling nozzle 76, and a vehicle-mounting tank 77, and these components form a system as a supply line 78 for high-pressure hydrogen.

The check valve 85 according to the present embodiment is provided on the secondary side of the dispenser 72 as an in-line check valve or is provided in other supply lines. Due to the check valve 85, leakage of hydrogen toward the primary side is prevented, an excellent backflow preventing performance is provided, a large flow rate is secured in an open valve state, and durability and sealing performance are improved.

Manual valves 81 are provided in respective connecting portions of the respective units of the hydrogen station, and automatic valves 80 are provided appropriately on the primary side or the secondary side of the respective units. The inside of the pressure accumulator 70 is divided into a plurality of tanks. By appropriately switching the valves 80 connecting the respective tanks and the compressor 71 and the valves 80 connecting the respective tanks and the dispenser 72, hydrogen is supplied from a tank of which the pressure has reached a predetermined pressure to the dispenser 72. On the other hand, a tank of which the pressure is lower than a predetermined lower limit pressure is filled with hydrogen from the compressor 71 (see Fig. 17) configured to gradually boost hydrogen supplied from a gas supply source (not illustrated) until the pressure of the tank reaches the predetermined pressure. The hydrogen gas gradually boosted up to a predetermined pressure by the compressor 71 is temporarily stored in arbitrary tanks in the pressure accumulator and the hydrogen gas boosted up to the predetermined pressure is supplied to a vehicle. Although the inside of the compressor 71 is divided into a plurality of tanks as illustrated in Fig. 17, portions (for example, portions where the pressure difference is 0.1 MPa or lower) where the pressure difference between the upstream side and the downstream side decreases may be present in a filling line (pipe) connecting the tanks in the course of gradually boosting hydrogen using a plurality of tanks. Moreover, it is known that this phenomenon that the pressure difference decreases occurs frequently in the course of gradually boosting the hydrogen. Therefore, it is necessary to prevent leakage (backflow) in the course of gradually boosting the hydrogen and it is particularly effective to arrange the check valve according to the present embodiment in the lines (pipes) for gradually boosting the hydrogen illustrated in Fig. 17.

Although Fig. 16 illustrates an example in which the check valve according to the present embodiment is mounted on a hydrogen station, the present invention is not limited to this example, and the check valve according to the present embodiment may be mounted on a vehicle (a vehicle-mounting tank). More specifically, the check valve according to the present embodiment can be used as a check valve for preventing backflow of hydrogen from a hydrogen supply port in the line from the hydrogen supply port of a vehicle to a vehicle-mounting tank, a check valve for preventing backflow of hydrogen from the vehicle-mounting tank, and check valves disposed in the middle of the line. Alternatively, the check valve according to the present embodiment can be used as a check valve for preventing backflow in a line for supplying hydrogen from a vehicle-mounting tank to a fuel cell. Although Fig. 16 illustrates an example in which the check valve 85 according to the present embodiment is provided on the secondary side of the dispenser 72, the check valve 85 may be provided in the other supply lines (for example, the compressor 71 or the pressure accumulator 70).

While the embodiment of the present invention has been described with reference to specific examples. However, the present invention is not limited to these specific examples. For example, although the "sealing member" in the present invention includes the sheet 352 or 352b and the O-ring 354, the sealing member may include members formed from the other elastic materials as long as the members have a function of making contact with the valve seat 21 to create a sealing state. Those skilled in the art can appropriately modify the above embodiments, and such modifications also fall within the scope of the present invention as long as they include the features of the present invention.

### Reference Signs List

- 1: Body
- 2: Cap element
- 3: Poppet valve element (valve element)
- 4: Gasket
- 5: Spring
- 10: Pipe joining portion
- 11: Small diameter hole
- 12: Valve element accommodating portion
- 16: Sleeve
- 17: Cap
- 20: Passage
- 21: Valve seat
- 23: Distal end surface
- 30: Insertion hole portion
- 31: Pipe joining portion
- 35: Head
- 36: Passage hole
- 37: Cylindrical portion
- 70: Pressure accumulator
- 71: Compressor
- 76: Filling nozzle
- 77: Vehicle-mounting tank
- 78: Supply line
- 351: Valve element sealing surface
- 352: Sheet (sealing member)
- 354: O-ring (sealing member)
- 356: Female screw portion
- P: Fluid passage
- Pr: Convex portion
- S: Contact surface
- W: Guide member
- Wa: Extension portion

## Claims

1. A check valve comprising:
a body portion having a fluid passage therein;
a valve seat provided in the middle of the fluid passage; and
a valve element that moves closer to and away from the valve seat to open and block the fluid passage, wherein
a sealing member softer than the valve element is provided in a valve element sealing surface of the valve element that can make contact with the valve seat,
the sealing member protrudes toward the valve seat from the valve element sealing surface,
at high pressure, the valve element moves toward the valve seat, the sealing member is compressively deformed by the valve seat, and the valve element sealing surface and the sealing member are brought into contact with the valve seat, and
at extremely low pressure, the valve element moves toward the valve seat, and only the sealing member among the sealing member and the valve element sealing surface is brought into contact with the valve seat to seal the fluid passage.

2. The check valve according to claim 1, wherein
the valve element sealing surface of the valve element is inclined in a direction away from the valve seat as the valve element sealing surface extends toward an outer circumference.

3. The check valve according to claim 1 or 2, wherein
a portion of the valve seat that makes contact with the sealing member is formed so as to swell toward the valve element.

4. The check valve according to any one of claims 1 to 3, wherein
the sealing member is a sheet formed from a resin material,
the sheet is fixed to the valve element by a screw that is screwed into a female screw portion formed on the valve element sealing surface of the valve element, and
a guide member that extends by a distance equal to or greater than a thickness of the sheet in an axial direction of the screw from a position corresponding to a bottom surface of the sheet to support a head seat of the screw is provided around a cylindrical portion of the screw.

5. The check valve according to claim 4, wherein
the guide member further includes an extension portion that covers a portion of a surface of the sheet that is close to a central shaft of the screw, and
a portion, close to the central shaft of the screw, of a contact surface of the valve element that makes contact with the sheet is provided with a convex portion that protrudes toward the extension portion from the contact surface.

6. The check valve according to any one of claims 1 to 3, wherein
the sealing member is provided closer to an outer circumference than a portion, excluding the sealing member, of the valve element, the portion being contactable with the valve seat.

7. The check valve according to any one of claims 1 to 6, wherein
the valve element is formed integrally from the same material.

8. A hydrogen station in which the check valve according to any one of claims 1 to 7 is used in a supply line for high-pressure hydrogen.
